# FASCICULE DE BREVET EUROPEEN

(11) **EP 2 429 359 B1**
(45) Date de publication et mention de la délivrance du brevet: **02.04.2014**
(21) Numéro de dépôt: 10727772.5
(22) Date de dépôt: 07.05.2010
(51) Int. Cl.: A47J 43/046

(54) **APPAREIL ELECTROMENAGER DE PREPARATION CULINAIRE COMPORTANT UN RECIPIENT DE TRAVAIL EN CONTACT THERMIQUE AVEC UN ELEMENT CHAUFFANT**
HAUSHALTSKOCHGERÄT MIT EINEM ARBEITSBEHÄLTER IN WÄRMEKONTAKT MIT EINEM HEIZELEMENT
HOUSEHOLD CULINARY APPLIANCE COMPRISING A WORKING CONTAINER IN THERMAL CONTACT WITH A HEATING ELEMENT

(30) Priorité: 12.05.2009 FR 0902274
(43) Date de publication de la demande: 21.03.2012
(73) Titulaire: SEB S.A., 69130 Ecully (FR)
(72) Inventeur: JOUATEL, Alexis, F-53100 Mayenne (FR); GOUPIL, Dominique, F-53640 Champeon (FR); RETOUR, Stéphane, F-53470 Commer (FR)
(74) Mandataire: Bourrières, Patrice
(86) Numéro de dépôt international: PCT/FR2010/050890
(87) Numéro de publication internationale: WO 2010/130929

(56) Documents cités:
- WO-A-83/02884
- WO-A-2005/037036
- GB-A- 450 324

## Description

La présente invention se rapporte au domaine technique général des appareils électroménagers de préparation culinaire comportant un récipient de travail comprenant un outil rotatif destiné à être entraîné en rotation par un boîtier moteur et se rapporte plus particulièrement à un appareil électroménager dans lequel le récipient de travail est en contact thermique avec un élément chauffant.

Il est connu, de la demande de brevet W02005/037036, un appareil de préparation culinaire comprenant un récipient de travail comportant un outil rotatif entraîné en rotation par un boîtier moteur, le récipient de travail comportant une résistance chauffante disposée dans le fond du récipient et permettant de chauffer le contenu du récipient de travail. De tels appareils munis d'une résistance chauffante présentent l'avantage de permettre la réalisation de boissons chaudes ou de soupes directement dans le récipient de l'appareil.

Cependant, dans ces appareils de l'art antérieur, la résistance chauffante présente une forme annulaire s'étendant autour de l'outil central rotatif, ce qui impose d'avoir un récipient de travail présentant un fond de diamètre important pour que la résistance chauffante puisse être suffisamment éloignée du palier de l'axe de l'outil et ne pas surchauffer ce dernier. Ce problème est particulièrement important pour les appareils de type blender, où l'outil peut être amené à très haute vitesse, de l'ordre de 15 000 à 20 000 tr/mn, de sorte que la chaleur dégagée par friction lors de la rotation de l'outil dans son palier est déjà très élevée.

Un tel agencement de la résistance chauffante autour de l'axe de l'outil rotatif conduit donc à l'obtention d'un récipient présentant un diamètre important qui présente l'inconvénient de comporter un foyer de mixage de grand volume, nécessitant l'utilisation d'un outil rotatif de grande taille pour mixer efficacement les aliments présents dans le récipient. Un tel appareil nécessite donc un moteur relativement puissant pour pouvoir entraîner l'outil rotatif à haute vitesse et ne permet pas un mixage efficace de petites quantités d'ingrédients.

Aussi, un but de la présente invention est de proposer un appareil électroménager de préparation culinaire comportant un récipient de travail comprenant à la fois un foyer de mixage de faible volume, permettant l'utilisation d'un moteur de faible puissance, et un élément chauffant permettant de chauffer le contenu du récipient. Un autre but de la présente invention est de proposer un appareil de préparation culinaire dans lequel le montage de l'élément chauffant est facilité.

A cet effet, l'invention se rapporte à un appareil électroménager de préparation culinaire comportant un boîtier renfermant un moteur et un récipient de travail comportant un fond supportant un outil rotatif entraîné en rotation par le moteur, le récipient de travail étant en contact thermique avec un élément chauffant permettant de chauffer le contenu du récipient de travail, caractérisé en ce que l'élément chauffant ne s'étend latéralement que d'un côté de l'outil rotatif.

De cette manière, l'élément chauffant ne vient pas entourer l'outil rotatif supporté par le fond du récipient de sorte que l'élément chauffant et l'outil rotatif se trouvent disposés côte à côte lorsque l'on regarde le récipient en vue de dessus, l'élément chauffant pouvant ainsi être suffisamment distant de l'outil rotatif comportant un axe traversant la paroi de fond du récipient sans entraîner une augmentation importante du diamètre du fond du récipient sur tout le pourtour de l'outil rotatif.

Selon une autre caractéristique de l'invention, l'élément chauffant est en contact thermique avec le fond du récipient.

Selon une autre caractéristique de l'invention, l'outil rotatif est excentré dans le fond du récipient.

Selon une autre caractéristique de l'invention, l'élément chauffant est disposé à l'extérieur du récipient de travail. Par disposé à l'extérieur du récipient de travail, il faut comprendre que l'élément chauffant ne vient pas à l'intérieur du volume du récipient de travail destiné à recevoir les aliments à traiter et n'est donc pas en contact direct avec des aliments à chauffer.

Selon une autre caractéristique de l'invention, l'outil rotatif est monté en rotation autour d'un axe disposé dans une première moitié du fond du récipient, l'élément chauffant étant disposé dans l'autre moitié du fond du récipient.

Selon encore une autre caractéristique de l'invention, l'élément chauffant est une résistance chauffante supportée par le fond du récipient.

Selon encore une autre caractéristique de l'invention, le fond du récipient comporte une partie basse formant un foyer de mixage recevant l'outil rotatif et une partie surélevée présentant une surface inclinée en direction de la partie basse, la surface inclinée supportant l'élément chauffant.

Selon une autre caractéristique de l'invention, la surface inclinée comporte un plan incliné recevant l'élément chauffant.

Selon une autre caractéristique de l'invention, le fond du récipient est réalisé en matériau métallique.

Selon une autre caractéristique de l'invention, le récipient de travail comporte une enveloppe, en métal ou en matériau transparent tel que du verre ou du plastique, rapportée dans le prolongement du fond en matériau métallique.

Selon une autre caractéristique de l'invention, le fond en matériau métallique comporte un thermostat de régulation de l'élément chauffant.

Selon une autre caractéristique de l'invention, la résistance chauffante est alimentée par un circuit d'alimentation comportant un fusible thermique disposé contre le fond en matériau métallique.

Selon une autre caractéristique de l'invention, l'appareil est un appareil blender dans lequel l'outil rotatif est un outil coupant pouvant tourner à une vitesse supérieure à 10 000 tr/mn.

L'invention concerne également un récipient de travail pour appareil électroménager de préparation culinaire, tel que précédemment décrit, comportant un fond comprenant un outil rotatif et supportant une résistance chauffante, caractérisé en ce que la résistance chauffante ne s'étend latéralement que d'un côté de l'outil rotatif.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil blender selon un mode particulier de réalisation de l'invention,
- la figure 2 est une vue en perspective représentant l'appareil de la figure 1 avec le récipient amovible désengagé du boîtier,
- la figure 3 est une vue en coupe longitudinale de l'appareil de la figure 1,
- la figure 4 est une vue de dessus du récipient de la figure 1 démuni de son couvercle,
- la figure 5 est une vue en perspective éclatée du récipient de l'appareil de la figure 1, la jupe inférieure du récipient étant démontée pour laisser apparaître la partie technique située sous le fond du récipient.

Seuls les éléments nécessaires à la compréhension de l'invention ont été représentés. Pour faciliter la lecture des dessins, les mêmes éléments portent les mêmes références d'une figure à l'autre.

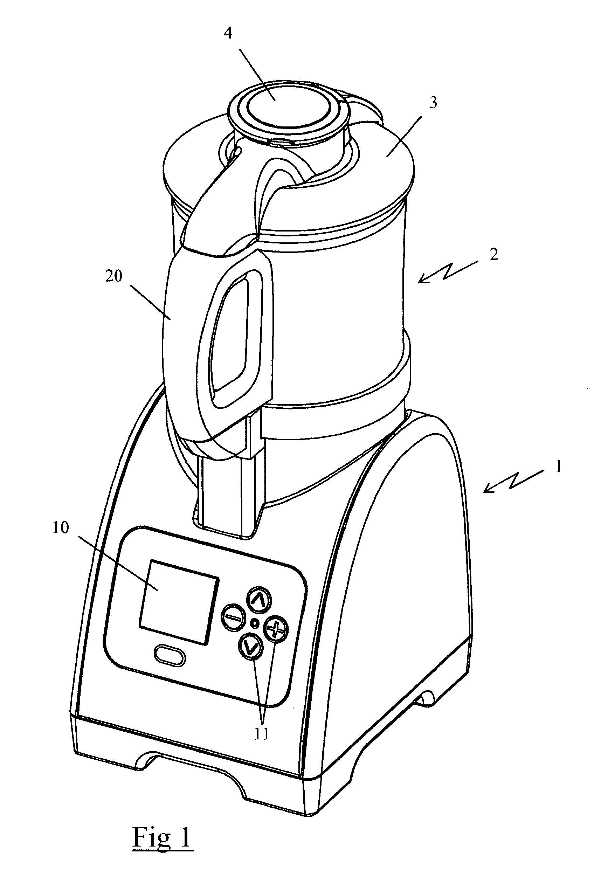

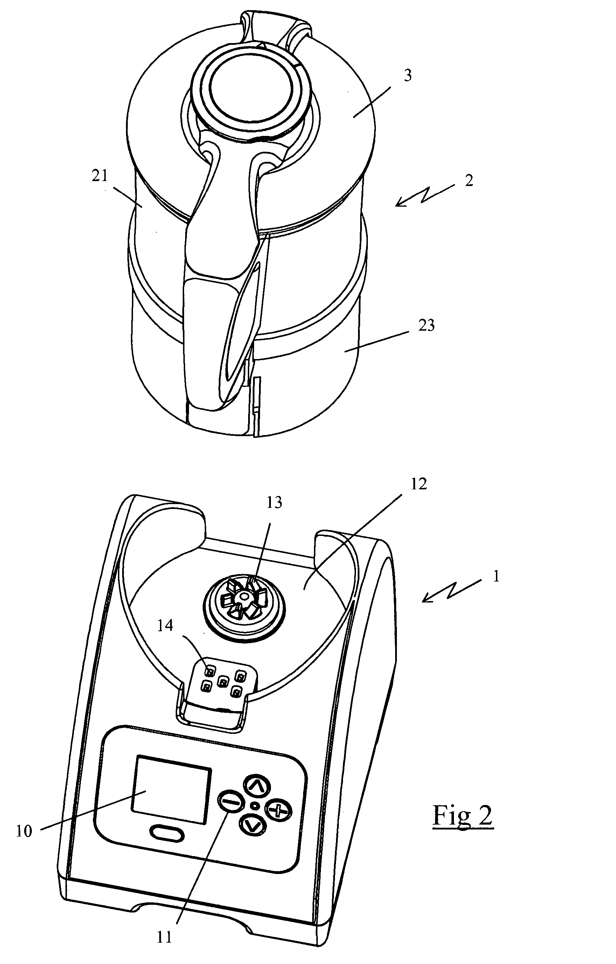

Les figures 1 et 2 représentent un appareil blender comportant un boîtier 1 comprenant une face avant munie d'un écran d'affichage 10 et de touches de commande 11, le boîtier 1 supportant un récipient de travail 2 comprenant une poignée 20 et un couvercle 3 amovible muni d'une ouverture centrale fermée par un bouchon doseur 4.

Comme on peut le voir sur la figure 2, le récipient de travail 2 est amovible du boîtier 1 et comporte à cet effet une extrémité inférieure comprenant une embase venant s'engager dans un socle de réception 12 du boîtier 1, ce dernier comportant un entraîneur 13 excentré vers l'arrière du boîtier 1 et un connecteur 14 disposé à proximité de la face avant du boîtier 1.

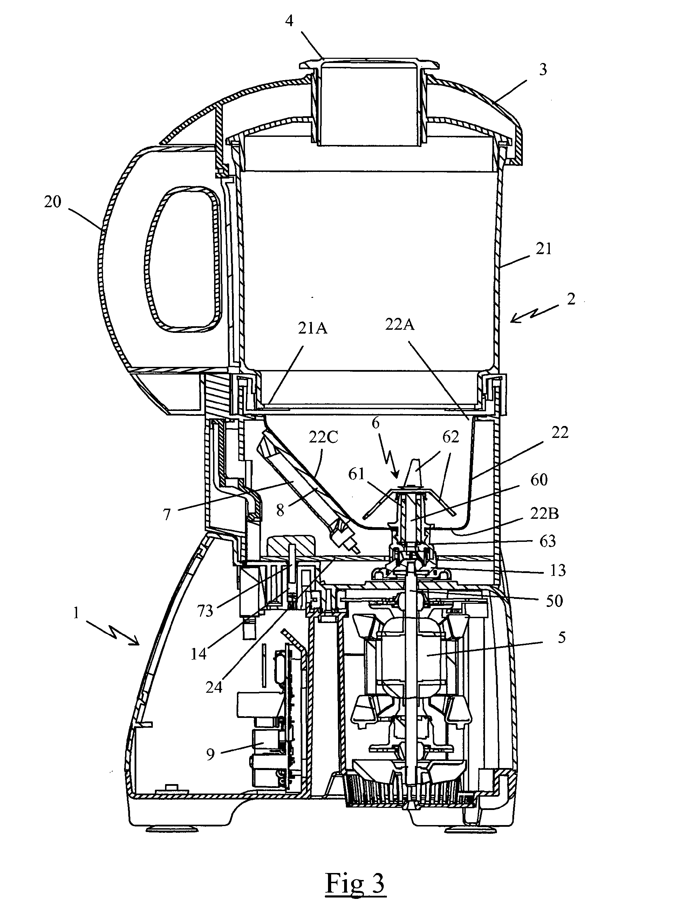

Conformément à la figure 3, le boîtier 1 renferme un moteur 5 comportant un arbre de sortie 50 qui est relié directement à l'entraîneur 13 présent sur le socle de réception 12, le moteur 5 étant préférentiellement un moteur de type universel, d'une puissance comprise entre 500 W et 700 W, pouvant atteindre une vitesse de rotation de l'ordre de 20 000 tr/mn.

Le récipient de travail 2 comporte une enveloppe 21 sensiblement cylindrique, préférentiellement en métal ou en matériau transparent tel que du verre ou du plastique, comportant une ouverture supérieure fermée par le couvercle 3 et une extrémité inférieure munie d'un léger étranglement définissant une ouverture inférieure 21A, d'un diamètre de l'ordre de 12 cm, qui débouche directement sur un fond 22 métallique, réalisé avantageusement en matériau inox. Le fond 22 métallique est rapporté par collage contre l'enveloppe cylindrique 21 et comporte une ouverture supérieure 22A, d'un diamètre de l'ordre de 12 cm, bordée par un repli venant en bordure de l'ouverture inférieure 21 A de l'enveloppe 21.

Le fond 22 métallique reçoit un outil rotatif 6 constitué classiquement par un axe 60, avantageusement guidé par un palier en bronze 61, dont l'extrémité supérieure supporte quatre lames 62 coupantes disposées à 90° les unes des autres, et dont l'extrémité inférieure comporte un entraîneur 63 venant coopérer avec l'entraîneur 13 du boîtier moteur 1 lorsque le récipient 2 est disposé sur le socle de réception 12.

Plus particulièrement selon l'invention, et conformément aux figures 3 à 5, le fond 22 du récipient reçoit également une résistance chauffante 7, du type résistance blindée, qui s'étend latéralement d'un seul côté de l'outil rotatif 6. Dans l'exemple illustré, l'outil rotatif 6 et la résistance chauffante 7 sont excentrés dans le fond 22 métallique de sorte que l'outil rotatif 6 s'étend essentiellement dans une première moitié du fond 22 du récipient 2 et la résistance chauffante 7 s'étend dans l'autre moitié.

De manière préférentielle, le fond 22 métallique présente la forme d'une gamelle s'étendant sur une hauteur de l'ordre de 6 cm et comporte, d'un côté, une partie basse 22B sensiblement plane dont la surface projetée, en vue de dessus, est légèrement inférieure à la moitié de la surface totale du fond 22 du récipient et, de l'autre côté, une partie surélevée 22C constituée par un plan incliné à 45° en direction de la partie basse 22B, dont la surface projetée, en vue de dessus, est également légèrement inférieure à la moitié de la surface totale du fond 22 du récipient.

L'outil rotatif 6 est disposé au centre de la partie basse 22B de sorte que les lames coupantes 62, qui s'étendent sur un rayon de l'ordre de 2,5 cm par rapport à l'axe 60 de l'outil, balayent le volume du dessus de la partie basse 22B, constituant ainsi un foyer de mixage de volume réduit dans lequel les aliments projetés contre le plan incliné 22C sont ramenés par gravité. Un tel foyer de mixage présente l'avantage de permettre un excellent brassage des aliments tout en chargeant peu l'outil rotatif 6 permettant ainsi d'utiliser un moteur 5 de faible puissance. Un tel récipient 2 permet également de traiter de faibles quantités d'ingrédients avec une très grande efficacité.

De manière avantageuse, la surface inférieure du plan incliné 22C reçoit une plaque en aluminium 8, fixée par collage ou par soudage, contre laquelle la résistance chauffante 7 est rapportée, une telle plaque en aluminium 8 favorisant la diffusion thermique et permettant une meilleure répartition de la chaleur dégagée par la résistance chauffante le long du plan incliné 22C.

La résistance chauffante 7 est reliée par des câbles électriques, non représentés sur les figures, à un circuit d'alimentation comportant un thermostat 71 disposé contre la face inférieure du fond 22 métallique, au niveau de la partie basse 22B, ce thermostat 71 étant préférentiellement constitué par une thermistance de type CTN assurant la régulation de l'alimentation de la résistance chauffante 7 pour amener le contenu du récipient 2 à une température de consigne. Le circuit d'alimentation de la résistance chauffante 7 comporte également un fusible thermique 72 de sécurité, disposé contre la surface inférieure du fond 22 métallique au niveau de la partie basse 22B, évitant toute surchauffe dans le cas d'une défaillance du thermostat 71.

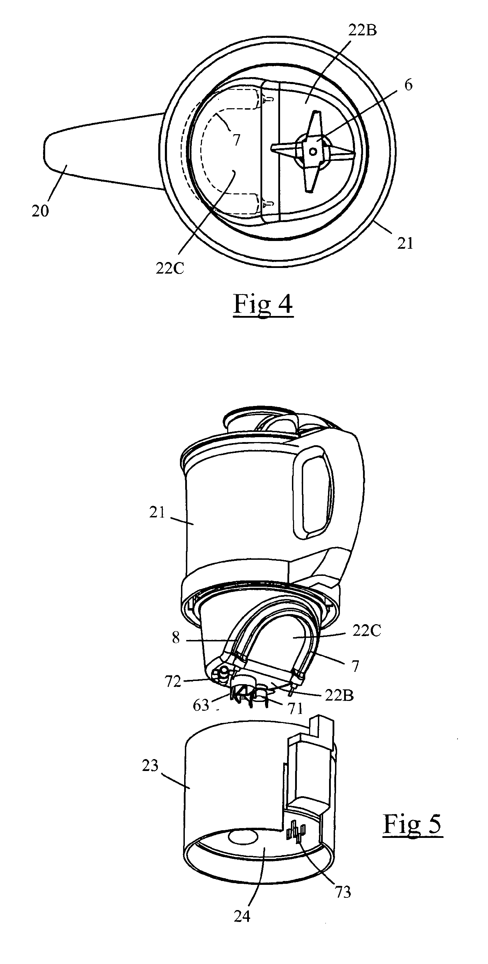

Comme on peut mieux le voir sur la figure 5, l'embase du récipient 2 comporte une jupe 23 cylindrique, en matière plastique, venant dans le prolongement de l'enveloppe cylindrique 21 et venant entourer le fond 22 métallique du récipient 2 pour masquer ce dernier, la jupe 23 présentant une forme complémentaire de celle du socle de réception 12 de manière à assurer le guidage et le maintien en position du récipient 2 sur le socle de réception 12.

L'embase du récipient 2 comporte également un cache inférieur 24 présentant la forme d'un disque venant à l'intérieur de la jupe 23, sous le fond 22 métallique, afin de masquer ce dernier. Le cache inférieur 24 comporte un orifice permettant le passage de l'entraîneur 63 et supporte des broches de connexion 73 qui viennent s'insérer dans le connecteur 14 lorsque le récipient 2 est placé sur le socle de réception 12. Ces broches de connexion 73 sont reliées au circuit d'alimentation de la résistance chauffante 7 et permettent l'alimentation électrique de la résistance chauffante 7 à partir du boîtier moteur 1, ce dernier étant préférentiellement relié au réseau électrique domestique au moyen d'un cordon d'alimentation, non représenté sur les figures.

Conformément à la figure 3, le boîtier 1 intègre une carte de commande 9 qui contrôle à la fois le fonctionnement du moteur 5 et le fonctionnement de la résistance chauffante 7, cette carte de commande 9 comprenant des mémoires dans lesquelles sont stockées des séquences de fonctionnement prédéfinies du moteur 5 et de la résistance chauffante 7. La carte de commande 9 est reliée à l'écran d'affichage 10 de la face avant où sont indiqués les différents modes opératoires possibles et les touches de commandes 11 qui permettent à l'utilisateur de sélectionner une vitesse de rotation du moteur 5, une température de consigne de chauffage ou une recette particulière correspondant à la réalisation automatique de séquences de mixage et de chauffage.

L'appareil ainsi réalisé présente l'avantage de posséder un récipient de travail 2 comprenant à la fois un foyer de mixage de faible volume et une résistance chauffante 7 permettant de chauffer le contenu du récipient sans engendrer de surchauffe importante au niveau de l'outil rotatif 6.

En effet, lors du fonctionnement de l'appareil, la zone de chauffage est essentiellement concentrée sur le plan incliné 22C où la chaleur est diffusée au travers de la plaque en aluminium 8, les ingrédients mixés étant projetés par le flux de mixage sur cette zone de chauffage lors du fonctionnement du moteur 5 permettant ainsi d'obtenir une élévation progressive de la température des ingrédients mixés.

De plus, un tel agencement de la résistance chauffante 7 offre une grande facilité de montage, la zone recevant la résistance chauffante 7 s'étendant que d'un seul côté de l'outil rotatif 6 et étant bien accessible.

L'inclinaison du plan 22C recevant la résistance chauffante 7 permet d'augmenter encore l'accessibilité lors du montage et présente également l'avantage de réduire la chaleur diffusée par rayonnement sous le fond 22 métallique, en direction de l'outil rotatif 6, étant donné que l'essentiel de la résistance chauffante 7 est masqué par le plan incliné 22C et n'est donc plus en vision directe de l'outil rotatif 6.

Enfin, un tel appareil présente également l'avantage d'être économique à mettre en oeuvre étant donné que le faible volume du foyer de mixage permet l'utilisation d'un moteur de faible puissance.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, l'enveloppe et le fond du récipient pourront présenter, en vue de dessus, une forme ovale.

Ainsi dans une variante de réalisation de l'invention, la résistance chauffante blindée pourra être remplacée par des pistes résistives.

Ainsi dans une autre variante de réalisation, le boîtier pourra être alimenté électriquement au moyen de batteries.

Ainsi, dans une variante de réalisation, l'enveloppe du récipient de travail pourra être démontable du fond.

Dans une autre variante de réalisation, le fusible thermique et le thermostat pourront être disposés à l'intérieur de palpeurs fixés sur le boîtier moteur et venant en contact du fond du récipient.

## Revendications

1. Appareil électroménager de préparation culinaire comportant un boîtier (1) renfermant un moteur (5) et un récipient de travail (2) comportant un fond (22) supportant un outil rotatif (6) entraîné en rotation par ledit moteur (5), ledit récipient de travail (2) étant en contact thermique avec un élément chauffant (7) permettant de chauffer le contenu du récipient de travail (2), **caractérisé en ce que** ledit élément chauffant (7) ne s'étend latéralement que d'un côté de l'outil rotatif (6).

2. Appareil électroménager de préparation culinaire selon la revendication 1, **caractérisé en ce que** ledit élément chauffant (7) est en contact thermique avec le fond (22) du récipient.

3. Appareil électroménager de préparation culinaire selon la revendication 2, **caractérisé en ce que** ledit élément chauffant (7) est disposé à l'extérieur du récipient de travail (2).

4. Appareil électroménager de préparation culinaire selon l'une quelconque des revendications 1 à 3, **caractérisé en ce que** ledit outil rotatif (6) est excentré dans le fond (22) du récipient.

5. Appareil électroménager de préparation culinaire selon la revendication 4, **caractérisé en ce que** l'outil rotatif (6) est monté en rotation autour d'un axe (60) disposé dans une première moitié du fond (22) du récipient et **en ce que** l'élément chauffant (7) est disposé dans l'autre moitié du fond (22) du récipient.

6. Appareil électroménager de préparation culinaire selon l'une quelconque des revendications 1 à 5, **caractérisé en ce que** ledit élément chauffant (7) est une résistance chauffante supportée par le fond (22) du récipient.

7. Appareil électroménager de préparation culinaire selon la revendication 6, **caractérisé en ce que** le fond (22) du récipient comporte une partie basse (22B) formant un-foyer de mixage recevant l'outil rotatif (6) et une partie surélevée (22C) présentant une surface inclinée en direction de la partie basse (22B), ladite surface inclinée supportant l'élément chauffant (7).

8. Appareil électroménager de préparation culinaire selon la revendication 7, **caractérisé en ce que** la surface inclinée comporte un plan incliné recevant l'élément chauffant (7).

9. Appareil électroménager de préparation culinaire selon l'une quelconque des revendications 1 à 8, **caractérisé en ce que** le fond (22) du récipient est réalisé en matériau métallique.

10. Appareil électroménager de préparation culinaire selon la revendication 9, **caractérisé en ce que** le récipient de travail (2) comporte une enveloppe (21), en métal ou en matériau transparent tel que du verre ou du plastique, rapportée dans le prolongement du fond (22) en matériau métallique.

11. Appareil électroménager de préparation culinaire selon l'une quelconque des revendications 9 à 10, **caractérisé en ce que** le fond (22) en matériau métallique comporte un thermostat (71) de régulation de l'élément chauffant (7).

12. Appareil électroménager de préparation culinaire selon l'une quelconque des revendications 9 à 11, **caractérisé en ce que** la résistance chauffante (7) est alimentée par un circuit d'alimentation comportant un fusible thermique (72) disposé contre le fond (22) en matériau métallique.

13. Appareil électroménager selon l'une quelconque des revendications 1 à 12, **caractérisé en ce que** ledit appareil est un appareil blender dans lequel l'outil rotatif (6) est un outil coupant pouvant tourner à une vitesse supérieure à 10 000 tr/mn.

14. Récipient de travail pour appareil électroménager de préparation culinaire selon l'une quelconque des revendications 1 à 13, ledit récipient de travail (2) comportant un fond (22) comprenant un outil rotatif (6) et supportant une résistance chauffante (7), **caractérisé en ce que** ladite résistance chauffante (7) ne s'étend latéralement que d'un côté de l'outil rotatif (6).

## Patentansprüche

1. Elektrisches Haushaltsgerät zur Nahrungszubereitung mit einem Gehäuse (1), das einen Motor (5) umschließt, und einem Arbeitsbehälter (2) mit einem Boden (22), der ein drehbares Werkzeug (6) trägt, das von dem genannten Motor (5) in Drehung angetrieben wird, wobei der genannte Arbeitsbehälter (2) in thermischem Kontakt mit einem Heizelement (7) steht, das die Erwärmung des Inhalts des Arbeitsbehälters (2) ermöglicht, **dadurch gekennzeichnet, dass** sich dieses Heizelement (7) seitlich nur über eine Seite des drehbaren Werkzeugs (6) erstreckt.

2. Elektrisches Haushaltsgerät zur Nahrungszubereitung nach Anspruch 1, **dadurch gekennzeichnet, dass** das genannte Heizelement (7) in thermischem Kontakt mit dem Boden (22) des Behälters steht.

3. Elektrisches Haushaltsgerät zur Nahrungszubereitung nach Anspruch 2, **dadurch gekennzeichnet, dass** sich das genannte Heizelement (7) außen am Arbeitsbehälter (2) befindet.

4. Elektrisches Haushaltsgerät zur Nahrungszubereitung nach einem der Ansprüche 1 bis 3, **dadurch gekennzeichnet, dass** sich das genannte drehbare Werkzeug (6) außermittig am Boden (22) des Behälters befindet.

5. Elektrisches Haushaltsgerät zur Nahrungszubereitung nach Anspruch 4, **dadurch gekennzeichnet, dass** das drehbare Werkzeug (6) drehbar um eine Achse (60) montiert ist, die an einer ersten Hälfte des Bodens (22) des Behälters angebracht ist, während sich das Heizelement (7) an der anderen Hälfte des Bodens (22) des Behälters befindet.

6. Elektrisches Haushaltsgerät zur Nahrungszubereitung nach einem der Ansprüche 1 bis 5, **dadurch gekennzeichnet, dass** es sich bei dem genannten Heizelement (7) um einen Heizwiderstand handelt, der vom Boden (22) des Behälters getragen wird.

7. Elektrisches Haushaltsgerät zur Nahrungszubereitung nach Anspruch 6, **dadurch gekennzeichnet, dass** der Boden (22) des Behälters aus einem Unterteil (22B), das als Mischkammer dient und das drehbare Werkzeug (6) aufnimmt, und aus einem darüber befindlichen Teil (22C) mit einer zum Unterteil hin geneigten Fläche (22B) besteht, wobei diese geneigte Fläche das Heizelement (7) trägt.

8. Elektrisches Haushaltsgerät zur Nahrungszubereitung nach Anspruch 7, **dadurch gekennzeichnet, dass** die geneigte Fläche eine Schräge umfasst, die das Heizelement (7) aufnimmt.

9. Elektrisches Haushaltsgerät zur Nahrungszubereitung nach einem der Ansprüche 1 bis 8, **dadurch gekennzeichnet, dass** der Boden (22) des Behälters aus Metall hergestellt ist.

10. Elektrisches Haushaltsgerät zur Nahrungszubereitung nach Anspruch 9, **dadurch gekennzeichnet, dass** der Arbeitsbehälter (2) mit einer Ummantelung (21) aus Metall oder einem durchsichtigen Material wie Glas oder Kunststoff versehen ist, die in Verlängerung des aus Metall hergestellten Bodens (22) angebracht wird.

11. Elektrisches Haushaltsgerät zur Nahrungszubereitung nach einem der Ansprüche 9 bis 10, **dadurch gekennzeichnet, dass** der aus Metall hergestellte Boden (22) mit einem Thermostat (71) zur Steuerung des Heizelementes (7) ausgestattet ist.

12. Elektrisches Haushaltsgerät zur Nahrungszubereitung nach einem der Ansprüche 9 bis 11, **dadurch gekennzeichnet, dass** der Heizwiderstand (7) durch einen Versorgungsstromkreis mit einer thermischen Sicherung (72) gespeist wird, die an dem aus Metall hergestellten Boden (22) angebracht ist.

13. Elektrisches Haushaltsgerät nach einem der Ansprüche 1 bis 12, **dadurch gekennzeichnet, dass** es sich bei diesem Gerät um einen Mixer handelt und das in diesem befindliche drehbare Werkzeug (6) ein Schneidwerkzeug ist, welches sich mit einer Geschwindigkeit von über 10.000 Umdrehungen/Minute drehen kann.

14. Arbeitsbehälter für ein elektrisches Haushaltsgerät zur Nahrungszubereitung nach einem der Ansprüche 1 bis 13, wobei dieser Arbeitsbehälter (2) mit einem Boden (22) versehen ist, in dem sich ein drehbares Werkzeug (6) befindet und der einen Heizwiderstand (7) trägt, **dadurch gekennzeichnet, dass** sich dieser Heizwiderstand (7) seitlich nur über eine Seite des drehbaren Werkzeugs (6) erstreckt.

## Claims

1. Food preparation household electrical appliance comprising a housing (1) containing a motor (5) and a working receptacle (2) comprising a bottom (22) supporting a rotary tool (6) driven in rotation by said motor (5), said working receptacle (2) being in thermal contact with a heating element (7) for heating the content of the working receptacle (2), **characterised in that** said heating element (7) extends laterally only on one side of the rotary tool (6).

2. Food preparation household electrical appliance according to claim 1, **characterised in that** said heating element (7) is in thermal contact with the bottom (22) of the receptacle.

3. Food preparation household electrical appliance according to claim 2, **characterised in that** said heating element (7) is arranged outside the working receptacle (2).

4. Food preparation household electrical appliance according to any of claims 1 to 3, **characterised in that** said rotary tool (6) is arranged eccentrically in the bottom (22) of the receptacle.

5. Food preparation household electrical appliance according to claim 4, **characterised in that** the rotary tool (6) is rotatably mounted about an axis (60) arranged in a first half of the bottom (22) of the receptacle and **in that** the heating element (7) is arranged in the other half of the bottom (22) of the receptacle.

6. Food preparation household electrical appliance according to any of claims 1 to 5, **characterised in that** said heating element (7) is supported by the bottom (22) of the receptacle.

7. Food preparation household electrical appliance according to claim 6, **characterised in that** the bottom (22) of the receptacle comprises a bottom part (22B) forming a mixing area receiving the rotary tool (6) and a raised portion (22C) having an inclined surface sloping towards the bottom part (22B), said inclined surface supporting the heating element (7).

8. Food preparation household electrical appliance according to claim 7, **characterised in that** the inclined surface comprises an inclined plane receiving the heating element (7).

9. Food preparation household electrical appliance according to any of claims 1 to 8, **characterised in that** the bottom (22) of the receptacle is made of metallic material.

10. Food preparation household electrical appliance according to claim 9, **characterised in that** the working receptacle (2) comprises a housing (21) made of metal or transparent material such as glass or plastic, connected in the extension of the bottom (22) made of metallic material.

11. Food preparation household electrical appliance according to claim 9 or 10, **characterised in that** the bottom (22) made of metallic material comprises a thermostat (71) for regulating the heating element (7).

12. Food preparation household electrical appliance according to any of claims 9 to 11, **characterised in that** the heating element (7) is powered by a power supply circuit comprising a thermal fuse (72) arranged against the bottom (22) made of metallic material.

13. Food preparation household electrical appliance according to any of claims 1 to 12, **characterised in that** said appliance is a blender appliance wherein the rotary tool (6) is a cutting tool that can rotate at a speed of more than 10 000 r.p.m.

14. Working receptacle for a food preparation household electrical appliance according to any of claims 1 to 13, said working receptacle (2) having a bottom (22) comprising a rotary tool (6) and supporting a heating element (7), **characterised in that** said heating element (7) extends laterally only on one side of the rotary tool (6).
